# EUROPÄISCHE PATENTSCHRIFT

(11) **EP 0 654 881 B1**
(45) Veröffentlichungstag und Bekanntmachung des Hinweises auf die Patenterteilung: **15.01.1997**
(21) Anmeldenummer: 93118404.8
(22) Anmeldetag: 12.11.1993
(51) Int. Cl.: H02G 3/18

(54) **Installationsgerät mit rückstellbaren Spreizkrallen**
Installation equipment with retractable mounting claws
Appareil d'installation avec des griffes de coincement rétractables

(43) Veröffentlichungstag der Anmeldung: 24.05.1995
(73) Patentinhaber: SIEMENS AKTIENGESELLSCHAFT, 80333 München (DE)
(72) Erfinder: Pfauntsch, peter, Dipl.-Ing. (FH), D-93138 Lappersdorf (DE); Kotzam, Peter, Dipl.-Ing. (FH), D-93049 Regensburg (DE); Schlosser, Werner, Dipl.-Ing. (FH), D-93057 Regensburg (DE); Huttner, Roland, Dipl.-Ing. (FH), D-93133 Burglengenfeld (DE); Weissberger, Günther, Dipl.-Ing. (FH), D-93309 Kelheim (DE)

(56) Entgegenhaltungen:
- DE-A- 2 003 777
- DE-A- 4 105 795
- DE-U- 1 987 188
- DE-U- 9 011 391

## Beschreibung

Die Erfindung bezieht sich auf ein Installationsgerät der Elektroinstallation, das mittels Spreizkrallen in Unterputzdosen befestigbar ist, wobei die Spreizkrallen an Teilen des Tragbügels und bzw. oder am Gerätesockel kippbeweglich gehalten sind, im einzelnen nach Gattungsbegriff von Patentanspruch 1. Die Spreizkrallen können jeweils durch eine Stellschraube, die an einem einwärts zum Gerätesockel abgebogenen Schenkelende angreift, in ihre Spreizstellung gegen die Kraft eines rückstellenden Mittels gebracht werden.

Bei derartigen, sogenannten elektrischen Installationsgeräten mit Spreizkrallen, durch die sie in Unterputzdosen gehalten werden können, verwendet man üblicherweise Gummiringe, um die Spreizkrallen in einer Anlagestellung am Gerätesockel zu halten, so daß sie leicht montiert werden können. Es ist auch ein Installationsgerät der eingangs geschilderten Art bekannt, bei dem als rückstellendes Mittel ein gummi-elastischer Körper, insbesondere ein Silikongummikörper, unter der Spreizkralle im Abwinklungsbereich der Spreizkralle angeordnet ist (DE-C-4 125 767, FIG 4). Der gummielastische Körper ist auf Zug beanprucht. Als Installationsgeräte mit Spreizkrallen werden beispielsweise Steckdosen, Schalter, Taster und neuerdings auch Geräte der Gebäudesystemtechnik ausgeführt. Würde bei den Spreizkrallen ein rückstellendes Mittel fehlen, könnten sich die Spreizkrallen nach außen bewegen und das Einsetzen in eine Unterputzdose behindern. Bei Gummiringen ist nachteilig, daß diese mit der Zeit alterungsbedingt ihre Elastizität verlieren und daß sie verrotten. Die Demontage eines derartigen Installationsgerätes wird dann mühsam.

Ein Installationsgerät gemäß dem Oberbegriff des Anspruchs 1 ist aus DE-U-1987 188 bekannt.

Bei Serienfabrikaten, zu denen Installationsgeräte zuzuordnen sind, ist es wünschenswert, eine Konstruktion zu finden, die einfach ist und die sich in der Großserie leicht montieren läßt.

Der Erfindung liegt die Aufgabe zugrunde, ein Installationsgerät mit rückstellbaren Spreizkrallen zu entwickeln, das diesbezüglich einfach, wirtschaftlich und wirkungsvoll ist.

Die Lösung der geschilderten Aufgabe erfolgt durch ein Installationsgerät nach Patentanspruch 1. Als rückstellendes Mittel dient jeweils ein stabförmiger Körper aus federndem Material, der mit seinen Enden am Tragbügel oder am Gerätesockel gehalten ist und der an der Unterseite an der an einem Fenster geführten Spreizkralle unter Ausfederung anliegt. Hierbei hebt der stabförmige Körper die Spreizkralle gegen die obere Fensterbegrenzung als Lagerstelle an. Ein derartiges rückstellendes Mittel, beispielsweise ein Federstahldraht oder ein federnder Kunststoffbügel, ist im Installationsgerät geschützt angeordnet und einfach zu montieren.

Einen günstigen Hebelarm zwischen der Anlagestelle der Kralle an der oberen Fensterbegrenzung und der Anlagestelle des stabförmigen Körpers wird erzielt, wenn dieser durch Stege zwischen seinen Halterungen am Tragbügel und seiner Auflage an der Spreizkralle gegen die gedachte Ebene beabstandet ist, in der das Fenster liegt.

Nach einer Weiterbildung ist vorgesehen, daß die Spreizkrallen ihren Formquerschnitt verbreiternde Ausformungen, wie Noppen oder ausgeschnittene und angebogene Lappen aufweisen, so daß bei einer infolge geeigneter Biegung der Spreizkralle mit kleinen Biegeradius und verhältnismäßig geraden Schenkeln die Spreizkrallen mit ihrem geraden schenkelbereich im Fenster gehalten werden. Bei entsprechender Neigung des fensterbildenden Bereichs und bzw. oder der Formgebung der oberen Fensterbegrenzung liegen die Spreizkrallen dann an der äußeren Fensterkante an. Dadurch wird der Hebelarm verlängert und die rückstellende Kraft besonders groß.

Der stabförmige Körper kann in einfacher Weise in Taschen des Tragbügels gehalten werden. Ebenso kann das Fenster in einem Tragbügelbereich ausgebildet sein.

Die Erfindung soll nun anhand von in der Zeichnung grob schematisch wiedergegebenen Ausführungsbeispiel näher erläutert werden:
- In FIG 1: ist ein Installationsgerät in Seitenansicht auf die Spreizkrallen veranschaulicht, wobei zwei verschiedene Positionen der Spreizkralle veranschaulicht sind.
- In FIG 2: ist das Installationsgerät nach FIG 1 bei Ansicht der Spreizkralle von vorn dargestellt.
- In FIG 3: ist eine Einzelheit nach einer Weiterbildung wiedergegeben.

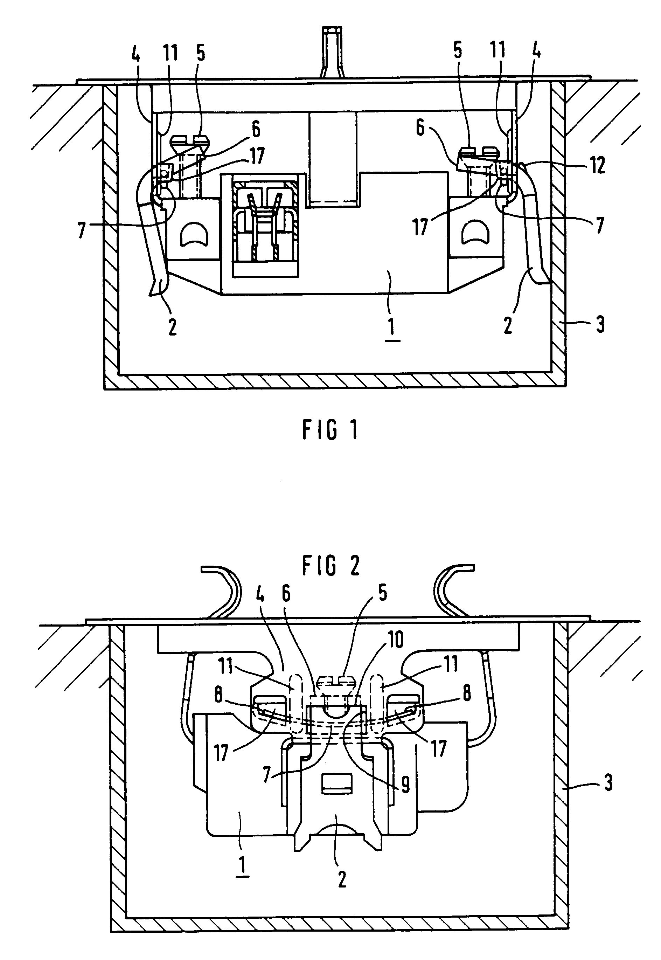

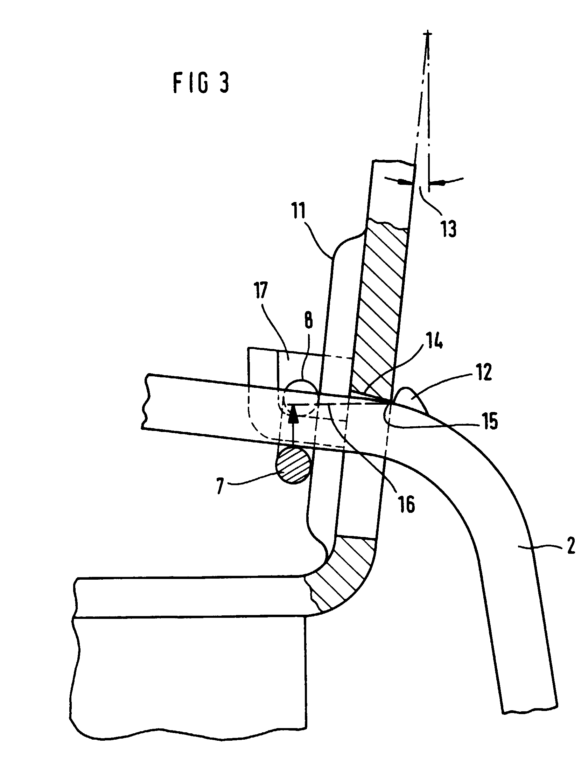

Das Installationsgerät 1 nach FIG 1 wird mittels Spreizkrallen 2 bei einer Postition gemäß der rechten Darstellung in einer Unterputzdose 3 gehalten. Die linke Spreizkralle nach FIG 1 ist in ihrer Ruhestellung veranschaulicht. Die Spreizkrallen 2 sind im Ausführungsbeispiel an Teilen des Tragbügels 4 kippbeweglich gehalten. Stellschrauben 5 greifen an einem einwärts zum Gerätesockel abgebogenen schenkelende 6 an. Dadurch können die Spreizkrallen 2 in ihre Spreizstellung nach der rechten Darstellung gegen die Kraft eines rückstellenden Mittels gebracht werden. Hierfür ist jeweils ein stabförmiger Körper 7 aus federndem Material vorgesehen, der mit seinen Enden 8 (man vergleiche FIG 2) am Tragbügel gehalten ist und der an der Unterseite an der an einem Fenster 9 geführten Spreizkralle unter Ausfederung anliegt. Hierbei wird die Spreizkralle gegen die obere Fensterbegrenzung 10 als Lagerstelle angehoben. Der stabförmige Körper 7 ist im Ausführungsbeispiel durch Stege 11 gegen die gedachte Ebene beabstandet, in der das Fenster 9 liegt. Die Stege können vorteilhafterweise aus Teilen des Tragbügels ausgebildet sein. Im Ausführungsbeispiel nach den FIG 1 und 2 ist eine Steckdose mit Spreizkrallen dargestellt.

Nach einer Weiterbildung gemäß FIG 3 weisen die Spreizkrallen 2 ihren Formquerschnitt verbreiternde Ausformungen 12 auf, so daß die spreizkralle am Fenster in definierter Lage gehalten wird. Derartige Ausformungen 12 nach den FIG 1 und 3 können Noppen oder ausgeschnittene und angebogene Lappen sein. Bei geeigneter Biegung der Spreizkralle 2 mit kleinem BiegeradiuS und verhältnismäßig geradem schenkel an dem Schenkelende 6 , an dem sich die stellschraube befindet, und bei entsprechender Neigung 13 des fensterbildenden Bereichs und bzw. oder der Formgebung der oberen Fensterbegrenzung liegen dann die Spreizkrallen 2 jeweils an der äußeren Fensterkante 15 an. Die Kraft des stabförmigen Körpers 7 auf die Spreizkralle 2 ist dann wegen des großen Hebelarms 16 besonders wirkungsvoll. Der stabförmige Körper 7 kann in einfacher Weise in Taschen 17 des Tragbügels 4 gehalten sein, wie es aus den FIG 1 und 2 zu ersehen ist.

## Patentansprüche

1. Installationsgerät (1) der Elektroinstallation, das mittels Spreizkrallen (2) in Unterputzdosen (3) befestigbar ist, wobei die Spreizkrallen an Teilen des Tragbügels (4) und bzw. oder am Gerätesockel kippbeweglich gehalten sind und durch Stellschrauben (5), die an einem einwärts zum Gerätesockel abgebogenen Schenkelende (6) angreifen, in ihre Spreizstellung gegen die Kraft eines rückstellenden Mittels zu bringen sind, wobei
das rückstellende Mittel aus federndem Material besteht und an der Unterseite an der in einem Fenster (9) geführten Spreizkralle unter Ausfederung anliegt und diese hierbei gegen eine obere Fensterbegrenzung (10) als Lagerstelle anhebt, **dadurch gekennzeichnet,** daß als rückstellen des Mittel jeweils ein stabförmiger Körper (7) vorgesehen ist, der mit seinen Enden (8) am Tragbügel oder am Gerätesockel gehalten ist.

2. Installationsgerät nach Anspruch 1,
**dadurch gekennzeichnet ,** daß der stabförmige Körper (7) durch Stege (11) zwischen seinen Halterungen am Tragbügel und seiner Auflage an der Spreizkralle gegen die gedachte Ebene des Fensters beabstandet ist.

3. Installationsgerät nach Anspruch 1 oder 2,
**dadurch gekennzeichnet,** daß die Spreizkrallen (2) ihren Formquerschnitt verbreiternde Ausformungen (12), wie Noppen oder ausgeschnittene und angebogene Lappen aufweisen, so daß bei einer infolge geeigneter Biegung der Spreizkralle mit kleinem Biegeradius und verhältnismäßig geradem Schenkel die Spreizkrallen mit ihrem verhältnismäßig geraden Schenkelbereich durch das Fenster (9) tritt und bei entsprechender Neigung (13) des fensterbildenden Bereichs und bzw. oder der Formgebung der oberen Fensterbegrenzung (14) an der äußeren Fensterkante (15) anliegt.

4. Installationsgerät nach einem der Ansprüche 1 bis 3,
**dadurch gekennzeichnet,** daß der stabförmige Körper (7) in Taschen (17) des Tragbügels (4) gehalten ist.

5. Installationsgerät nach einem der Ansprüche 1 bis 3,
**dadurch gekennzeichnet,** daß das Fenster in einem Tragbügelbereich ausgebildet ist.

6. Installationsgerät nach einem der Ansprüche 1 bis 5,
**dadurch gekennzeichnet,** daß der stabförmige Körper (7) aus Federstahl gefertigt ist.

## Claims

1. Installation device (1) of electrical installation, which can be fastened by means of expanding claws (2) in flush-type boxes (3), whereby the expanding claws are supported with a tilting motion on parts of the bracket (4) and/or on the base of the device and are to be brought into their expanded position against the force of resetting means by way of adjusting screws (5) which engage with a limb end (6) bent inwards to the base of the device, whereby the resetting means consist of resilient material and at the underside abut with rebound the expanding claw guided in a window (9) and in this respect lifts the expanding claw against an upper window boundary (10) as bearing, characterized in that as resetting means in each case a bar-shaped body (7) is provided, which is supported with its ends (8) on the bracket or on the base of the device.

2. Installation device according to claim 1, characterized in that the bar-shaped body (7) is spaced apart from the intended plane of the window by bars (11) between its supports at the bracket and its support at the expanding claw.

3. Installation device according to claim 1 or 2, characterized in that the expanding claws (2) have shaped parts (12), such as knubs or flaps which are cut out and bent, which widen the shaped cross section of the expanding claws, so that with a consequently suitable bending of the expanding claw with a small bending radius and relatively straight limb the expanding claw with its relatively straight limb area passes through the window (9) and with corresponding inclination (13) of the window-forming area and/or the shaping of the upper window boundary (14) abuts the outer window edge (15).

4. Installation device according to one of claims 1 to 3, characterized in that the bar-shaped body (7) is supported in pockets (17) of the bracket (4).

5. Installation device according to one of claims 1 to 3, characterized in that the window is constructed in a bracket area.

6. Installation device according to one of claims 1 to 5, characterized in that the bar-shaped body (7) is manufactured from spring steel.

## Revendications

1. Appareil (1) d'installation électrique pouvant être fixé dans des prises encastrées (3) au moyen de griffes d'écartement (2), les griffes d'écartement étant maintenues sur des parties de l'étrier de support (4) et/ou sur le socle de l'appareil de façon à être mobiles en basculement, et pouvant être amenées dans leur position d'extension en s'opposant à la force d'un moyen de rappel par des vis de réglage (5), qui s'appliquent à une extrémité (6) de branche incurvée par rapport au socle de l'appareil, le moyen de rappel étant constitué de matériau élastique et s'appliquant avec débattement à la partie inférieure de la griffe d'écartement qui est guidée dans une fenêtre (9), et soulevant ainsi celle-ci contre une délimitation supérieure (10) de la fenêtre servant de point d'appui,
caractérisé par le fait qu'un corps (7) en forme de barre, dont les extrémités (8) sont maintenues sur l'étrier de support ou sur le socle de l'appareil, est prévu comme moyen de rappel.

2. Appareil d'installation selon la revendication 1,
caractérisé par le fait que le corps (7) en forme de barre est écarté du plan théorique de la fenêtre par des barrettes (11) disposées entre ses fixations sur l'étrier de support et sa mise en appui sur la griffe d'écartement.

3. Appareil d'installation selon la revendication 1 ou 2,
caractérisé par le fait que les griffes d'écartement (2) comportent des excroissances (12) élargissant leur section transversale de profil telles que des ergots ou des pattes découpées et recourbées de sorte que, pour une courbure appropriée de faible rayon des griffes d'écartement et des branches relativement droites, les griffes d'écartement passent par la fenêtre (9) par leur partie de branche relativement droite et, pour une inclinaison (13) correspondante de la zone formant la fenêtre et/ou une conformation correspondante de la délimitation supérieure (14) de la fenêtre, et elles s'appliquent à l'arête extérieure (15) de la fenêtre.

4. Appareil d'installation selon l'une des revendications 1 à 3,
caractérisé par le fait que le corps (7) en forme de barre est maintenu dans des poches (17) de l'étrier de support (4).

5. Appareil d'installation selon l'une des revendications 1 à 3,
caractérisé par le fait que la fenêtre est formée dans une zone de l'étrier de support.

6. Appareil d'installation selon l'une des revendications 1 à 5,
caractérisé par le fait que le corps (7) en forme de barre est réalisé en acier à ressort.
